# EUROPEAN PATENT SPECIFICATION

(11) **EP 0 333 420 B1**
(45) Date of publication and mention of the grant of the patent: **21.07.1993**
(21) Application number: 89302469.5
(22) Date of filing: 14.03.1989
(51) Int. Cl.: B65B 31/02, G01M 3/36, B65B 55/14, B65B 7/28

(54) **Method of checking the sealing of plastics containers**
Dichtungsprüfverfahren von Kunststoff-Behältern
Méthode de contrôle du scellement de contenants en plastique

(30) Priority: 14.03.1988 JP 60092/88; 27.02.1989 JP 46164/89
(43) Date of publication of application: 20.09.1989
(73) Proprietor: AJINOMOTO CO., INC., Tokyo 104 (JP)
(72) Inventor: Watanabe, Toshiaki c/o AJINOMOTO CO., INC., Kawasaki-ku Kawasaki-shi Kanagawa-ken (JP); Ohba, Mitsuru c/o AJINOMOTO CO., INC., Kawasaki-ku Kawasaki-shi Kanagawa-ken (JP)
(74) Representative: Bond, Bentley George

(56) References cited:
- EP-A- 0 068 718
- US-A- 2 040 726
- US-A- 3 295 676
- US-A- 4 338 765
- US-A- 4 522 015

## Description

The present invention relates to a method of checking the sealing of a plastics container containing, for example, foodstuff or medicines.

Metal containers such as metal cans, glass bottles or plastics containers are generally used as containers for filling with foodstuffs or medicines. These containers may be subjected to a retort sterilization process after filling. Developments have been made to provide methods for inspecting the sealing property of the container which has been thus filled, the methods being appropriate to the properties of the container. For example, a plastics container suitable for retort sterilization includes a retort pouch and with this type of container, a visual inspection is carried out by depressing the pouch and detecting leakage. In an alternative method, a proposal has been made to put the container in a chamber at reduced pressure and to detect a pressure change in the chamber which may be produced due to a leakage. It should however be noted that the aforementioned methods which have hithertofore been developed for the inspection of the sealing property of a plastics container have poor detecting precision so that they are not widely used in actual practice. Further, no practical method has as yet been developed for the inspection of the sealing property of a plastics container of a bottle configuration, cup configuration or a tray configuration.

Thus, an object of the present invention is to provide a satisfactory method for inspecting the sealing property of a plastics container which has been subjected to a retort sterilization process.

In EP-A-0068718, there is disclosed an hermetically sealable container adapted to be filled with a hot liquid having a measurable vapour pressure. The container comprises a thermoplastic cup shaped member having a side wall and a bottom wall, and a closure disc attachable to the cup. The bottom wall has annular grooves formed therein to define a diaphragm structure capable of flexing when subjected to a predetermined pressure, and the cup has an annular lip extending outwardly around the top of its side wall. The closure disc is formed of sheet material for covering the cup and is adhesively securable to the lip portion. The bottom wall and the closure disc are capable of being pulled inwardly to maintain the side wall substantially undeformed after filling and sealing the container and after cooling of its contents.

According to the present invention, there is provided a method which comprises the steps of providing a three-dimensional plastics container having at least a portion which is deflectable under a negative pressure within the container, charging the container with contents in such a manner that a negative pressure will exist in the container at ambient temperature, and sealing the container, characterized in that, for sterilizing the contents of the container and for checking the sealing of the container, the method further comprises the steps of placing the container in a retort oven and subjecting it to sterilization at a predetermined temperature for a predetermined time and then cooling the container, regulating the pressure in the retort oven while the container is being cooled so that a positive pressure is developed within the container to reform the container, and measuring the deflection of the container at said deflectable portion after the contents in the container have cooled down to ambient temperature to determine the acceptability of the sealing property of the container from the negative pressure in the container.

In the method of the invention, when the contents of the container have been subjected to the retort sterilization, the pressure in the retort oven is regulated so that a positive pressure is produced in the container, or, in other words, that the pressure in the container is higher than that in the retort oven during the cooling process thereby to make the container return to its original form. When the container is cooled down to the ambient temperature, measurement is made of the deflection of the container under the resulting negative pressure to determine the sealing property.

In carrying out the method of the present invention, the negative pressure in the container at ambient temperature may be produced, for example, by charging the contents under a high temperature, by sealing the container under a reduced pressure atmosphere after the contents have been charged, or by sealing the container while steam is being injected, or by a combination of two or more of these methods.

According to the present invention, the plastics container having at least a portion which is deflectable under a negative pressure in the container is charged with its contents in a manner such that a negative pressure will be produced at ambient temperature and is then sealed. Therefore, as far as the sealing property is satisfactory, the deflectable portion of the container is deflected inwardly under the negative pressure. It is therefore possible to determine the acceptability of the sealing property through a measurement of the deflection.

The pressure in the retort oven is regulated according to the heating process for the retort sterilization in a manner such that a positive pressure is produced in the container with respect to the pressure in the retort oven. It should therefore be noted that the deflectable portion of the container is reformed by being slightly bulged outwardly to the shape which the container had when the contents were supplied. When the contents are cooled down to ambient temperature, a negative pressure is produced in the container so that the deflectable portion is deflected inwardly. If the sealing property of the container is not satisfactory, however, the negative pressure will not be produced in the container so that no deflection will be produced or the deflection will be small. It is therefore possible to inspect the sealing property of the container through a measurement of the deflection.

For a better understanding of the invention and to show how the same can be carried into effect, reference will now be made, by way of example only, to the accompanying drawings, wherein:
Figure 1 is a sectional view showing one example of a container which can be inspected in accordance with the present invention;
Figure 2 is an enlarged sectional view of the body of the container of Figure 1;
Figure 3 is an enlarged sectional view of the bottom and the lid of the container of Figure 1;
Figures 4 and 5 are diagrams showing the course of the retort sterilization process;
Figures 6(a) and (b) are diagrammatical sectional views of the container showing its configurations at different stages during the retort sterilization process;
FIGURE 7 shows the sealing property undergoing inspection;
FIGURES 8(a) and (b) show container configurations having acceptable and unacceptable sealing properties, respectively; and,
FIGURE 9 shows another example of the container to which the checking method of the present invention can be applied.

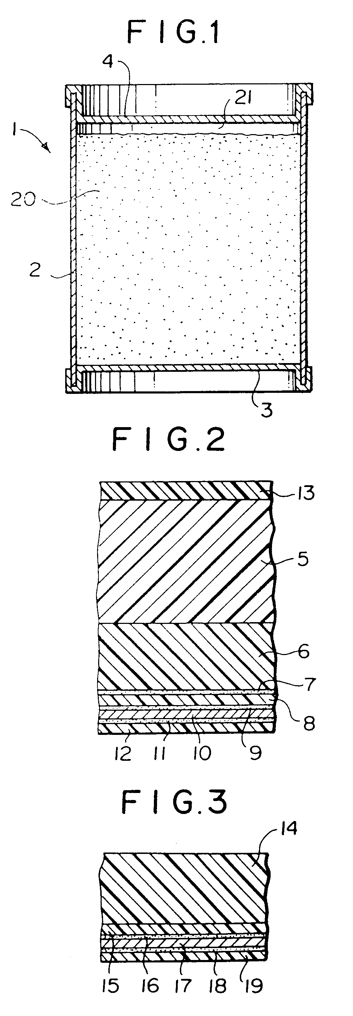

Referring first to Figure 1, there is shown a container 1 which can be used in the practice of the present invention and which includes a container body 2, a bottom 3 and a lid 4. As shown in Figure 2, the container body 2 includes a plastics layer 5 and a sheet 6 of a non-stretched polypropylene is attached to the inner surface of the plastics layer 5. A layer 8 of a non-stretched polypropylene is attached to the sheet 6 through an adhesive layer 7. An aluminum foil 10 is attached to the inner surface of the polypropylene layer 8 by means of an adhesive layer 9. The aluminum foil 10 has an inner surface to which a layer 12 of a non-stretched polypropylene is attached through an adhesive layer 11. The plastics layer 5 has an outer surface which is covered by a coating layer 13 of polypropylene block copolymer.

As shown in Figure 3, the bottom 3 and the lid 4 include a polypropylene layer 14, a layer 15 of non-stretched polypropylene provided at the inner surface of the polypropylene layer 14 and an aluminum foil 17 attached to the inner surface of the layer 15 by means of an adhesive layer 16. The aluminum foil 17 has an inner surface to which a layer 19 of non-stretched polypropylene is attached by means of an adhesive layer 18. The bottom 3 having the structure described above is attached by welding to the bottom end of the container body 2. When the container is in this state, contents 20 which may be foodstuffs or medicine are introduced from the top end of the container body 2 to a predetermined level and the lid 4 is attached to the top end of the container body 2 by means of welding. At this time, there is unavoidably produced a space 21 between the contents 20 and the lid 4.

When introducing the contents 20 into the container, the former may be maintained at a high temperature so that a negative pressure or a pressure lower than an environmental pressure will be developed in the container when the contents 20 have cooled down to ambient temperature. The negative pressure can also be produced by sealing the container, after the contents have been introduced, under a reduced pressure or by injecting steam prior to attaching the lid 4. With a container having a configuration as shown in Figure 1, the bottom 3 and the lid 4 are inwardly deflected when the negative pressure is developed in the container. The bottom 3 and the lid 4 may be referred to as portions which are deflectable when subject to negative pressure.

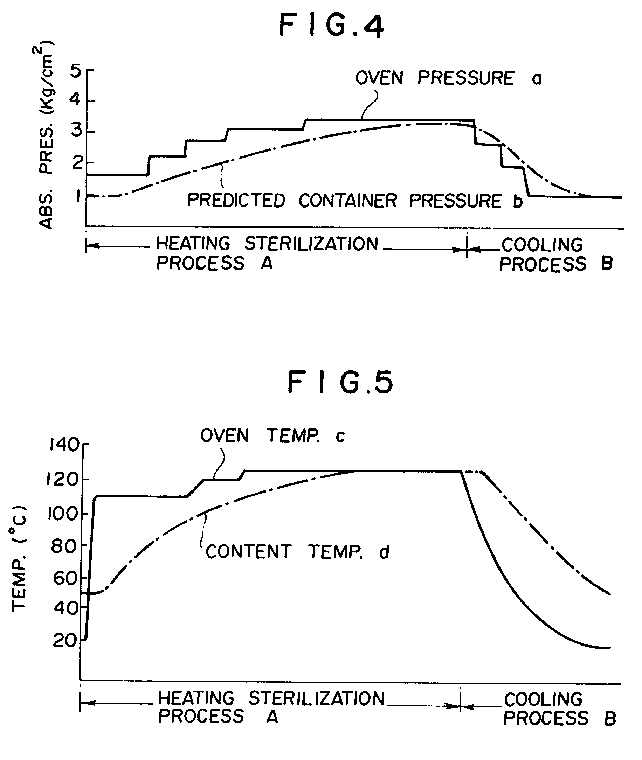

In the container 1 which is thus filled with the contents 20, it is possible to determine acceptability of sealing of the container by measuring the deflection of one or both of the bottom 3 and the lid 4. When the contents are to be subjected to retort sterilization, the container 1 having the contents 20 therein is introduced into a retort oven (not shown). Figures 4 and 5 show the course of the retort sterilizing process. In Figure 4, the solid line a shows the pressure in the retort oven and the dot-chain line b shows the predicted pressure in the container 1. In Figure 5, the solid line c shows the temperature in the retort oven and the dot-chain line d shows the contents temperature, that is, the temperature of the contents 20 within the container 1. The pressure in the container is affected by the temperature of the contents when introduced thereinto, the volume of the space 21 in the container 1, the expansion and shrinkage property of the contents and the deformation of the container 1 in response to a temperature change. Therefore, the predicted pressure in the container 1 can be obtained by taking these factors into account.

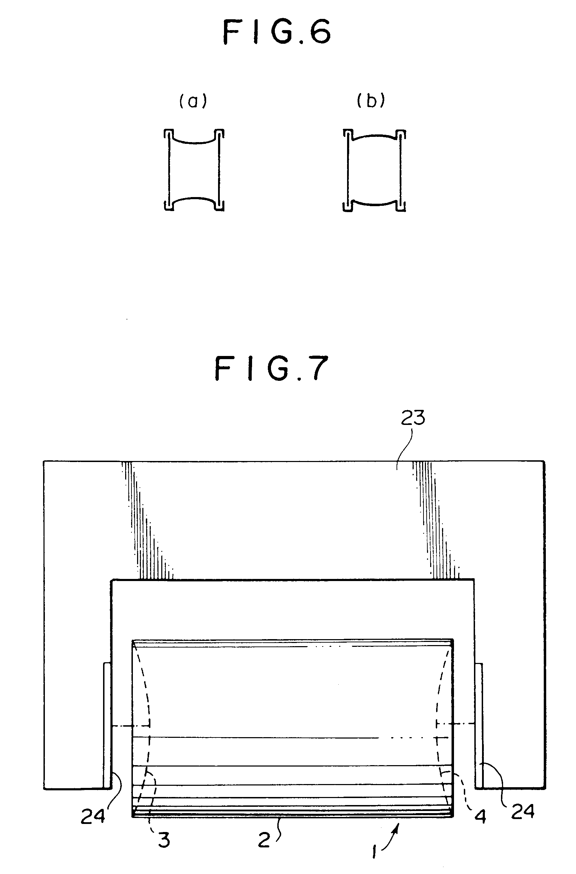

As shown in Figure 4, in the heating and sterilizing process A control is such that the predicted container pressure b is slightly lower than the oven pressure a. The pressure difference may be determined so to amount to a value under which the components of the container 1, namely, the container body 2, the bottom 3 and the lid 4 do not come apart owing to the pressure difference. In the heating and sterilizing process, the oven temperature c is increased as shown in Figure 5 and the contents temperature d is increased by a certain delay with respect to the increase in the oven temperature c. In this stage, the container 1 assumes a configuration as shown in Figure 6(a) and the bottom 3 and the lid 4 are deflected to produce an inwardly concave shape.

As soon as the sterilizing process is finished, the cooling process B is started. In the cooling process B, the contents temperature d is decreased as shown in Figure 5 with a certain delay with respect to the oven temperature c. It should further be noted that, as shown in Figure 4, the pressure a in the oven is regulated so that it is lower than the predicted pressure b in the container 1 to a certain extent. Therefore, the container 1 becomes deformed as shown in Figure 6(b) by having the bottom 3 and the lid 4 bulged outwardly. It is possible that the plastics material constituting the body 2, the bottom 3 and the lid 4 of the container 1 are softened to a certain extent at the sterilization temperature so that there are produced permanent deformations particularly in the bottom 3 and the lid 4. However, since the oven pressure a is maintained to a certain extent higher than the predicted pressure b in the container 1, it is possible to reform the bottom 3 and the lid 4 to the configuration which the container had at time of charging the content. The control of the oven pressure a in the cooling process is aimed at the reforming of the container 1 so that it is required that the control is made relatively strictly.

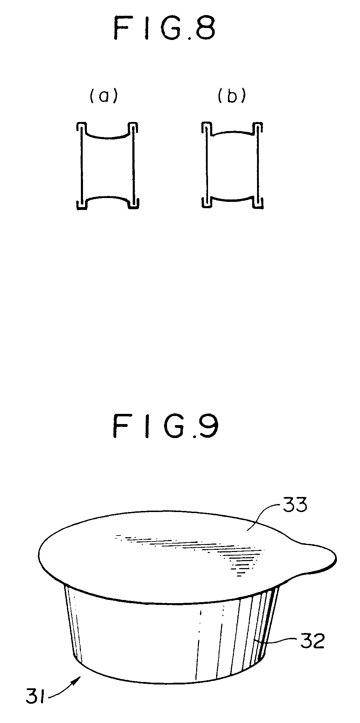

The retort sterilizing process comes to the end when the contents temperature is lowered to 50°C and the container 1 is taken out of the oven. Thus, a negative pressure develops in the container 1 as the contents 20 are cooled down to ambient temperature, producing deflections in the bottom 3 and the lid 4. By measuring the deflections, the sealing property of the container can be inspected. Figure 7 shows an example of how the deflection is measured using a high frequency detector 23. The high frequency detector 23 is provided with a pair of detecting heads 24 which are located at predetermined positions for measuring the distances between the detector heads and the bottom 3 and the lid 4, respectively. In the case where the container has a satisfactory sealing property, it has a configuration as shown in Figure 8(a), however, if the sealing is insufficient, the configuration will be as shown in Figure 8(b). It will therefore be understood that the quality of the sealing of the container 1 can be determined through the measurement of the distances between the detecting heads 24 and the bottom 3 and the lid 4, respectively. The measurement may be made with respect to only one of the bottom 3 and the lid 4.

Figure 9 shows another example of the container to which the present invention can be applied. In this example, the container 31 includes an open-top, cup-shaped container body 32 and a lid 33 welded to the upper portion of the body 32. The lid 33 provides the portion which is deflected under the negative pressure in the container. The container body 32 and the lid 33 may be formed of a laminated structure as in the previous example or of any other known plastics container material.

## Claims

1. A method which comprises the steps of providing a three-dimensional plastics container (1) having at least a portion which is deflectable under a negative pressure within the container (1), charging the container (1) with contents (20) in such a manner that a negative pressure will exist in the container (1) at ambient temperature, and sealing the container (1), characterized in that, for sterilizing the contents (20) of the container (1) and for checking the sealing of the container (1), the method further comprises the steps of placing the container (1) in a retort oven and subjecting it to sterilization at a predetermined temperature for a predetermined time and then cooling the container (1), regulating the pressure in the retort oven while the container (1) is being cooled so that a positive pressure is developed within the container (1) to reform the container (1), and measuring the deflection of the container (1) at said deflectable portion after the contents (20) in the container (1) have cooled down to ambient temperature to determine the acceptability of the sealing property of the container (1) from the negative pressure in the container (1).

2. A method in accordance with claim 1, in which the negative pressure in the container (1) at ambient temperature is produced by one or a combination of two or more of charging the contents (20) while the contents (20) are maintained at a high temperature, sealing the container (1) in a reduced pressure environment after it has been charged with the contents (20), and injecting steam while the container (1) is being sealed.

## Patentansprüche

1. Verfahren, welches die Schritte umfaßt, einen dreidimensionalen Kunststoffbehälter (1) zu liefern, der wenigstens einen Teil hat, der unter Unterdruck in dem Behälter (1) biegbar ist, den Behälter (1) mit Inhalt (20) zu füllen in einer solchen Weise, daß in dem Behälter (1) bei Umgebungstemperatur ein Unterdruck bestehen wird, und den Behälter (1) abzudichten, dadurch gekennzeichnet, daß zur Sterilisierung des Inhalts (20) des Behälters (1) und zur Prüfung der Dichtung des Behälters (1) das Verfahren ferner die Schritte umfaßt, den Behälter (1) in einen Retortenofen zu stellen und ihn der Sterilisation bei einer vorbestimmten Temperatur für eine vorbestimmte Zeit zu unterziehen, und dann den Behälter (1) abzukühlen, den Druck in dem Retortenofen zu regulieren, während der Behälter (1) abgekühlt wird, so daß ein positiver Druck in dem Behälter (1) entwikkelt wird, um den Behälter (1) rückzubilden und die Biegung des Behälters (1) an dem biegbaren Teil zu messen, nachdem der Inhalt (20) in dem Behälter (1) sich auf Umgebungstemperatur abgekühlt hat, um die Eignung der Dichtungseigenschaft des Behälters (1) aus dem Unterdruck in dem Behälter (1) zu bestimmen.

2. Verfahren gemäß Patentanspruch 1, in dem der Unterdruck in dem Behälter (1) bei Umgebungstemperatur erzeugt wird durch eine oder eine Kombination von zwei oder mehr Befüllungen des Inhalts, während der Inhalt bei einer hohen Temperatur gehalten wird, den Behälter (1) abdichten in einer Umgebung verminderten Druckes, nachdem er mit dem Inhalt (20) befüllt worden ist, und Dampfeinleiten, während der Behälter (1) abgedichtet wird.

## Revendications

1. Procédé qui comprend les phases consistant à préparer un récipient en matière plastique à trois dimensions (1) possédant au moins une partie capable de fléchir sous l'effet d'une pression négative régnant à l'intérieur du récipient (1), à charger le récipient (1) de son contenu (20) de telle façon qu'une pression négative existe dans le récipient (1) à la température ambiante, et à fermer hermétiquement le récipient (1), caractérisé en ce que, pour stériliser le contenu (20) du récipient (1) et contrôler l'étanchéité du récipient (1), le procédé comprend en outre les phases consistant à placer le récipient (1) dans une étuve et à le soumettre à la stérilisation à une température prédéterminée pendant un temps prédéterminé, puis à refroidir le récipient (1), à régler la pression dans l'étuve pendant le refroidissement du récipient (1) de manière qu'il se développe une pression positive dans le récipient (1) pour remettre le récipient (1) en forme, et à mesurer le fléchissement du récipient (1) au niveau de ladite partie capable de fléchir après que le contenu (20) du récipient (1) ait été refroidi à la température ambiante, pour déterminer l'acceptabilité de la propriété d'étanchéité du récipient (1) en se basant sur la pression négative à l'intérieur du récipient (1).

2. Procédé selon la revendication 1, caractérisé en ce que la pression négative régnant dans le récipient (1) à la température ambiante est produite par l'une, ou par une combinaison de deux ou plus de deux, des phases consistant à : charger le contenu (20) pendant que le contenu (20) est maintenu à une température élevée, fermer nermétiquement le récipient (1) dans un environnement à pression réduite après qu'il a été chargé du contenu (20) et injecter de la vapeur en même temps pendant qu'on ferme hermétiquement le récipient (1).
